# EUROPEAN PATENT SPECIFICATION

(11) **EP 0 869 195 B1**
(45) Date of publication and mention of the grant of the patent: **29.08.2001**
(21) Application number: 98830176.8
(22) Date of filing: 24.03.1998
(51) Int. Cl.: C22C 16/00, H01J 7/18

(54) **Non-evaporable getter alloys**
Nicht verdampfbare Getterlegierungen
Alliages absorbeurs de gaz, non vaporisables

(30) Priority: 03.04.1997 IT MI970769
(43) Date of publication of application: 07.10.1998
(73) Proprietor: SAES GETTERS S.p.A., Lainate (Milano) (IT)
(72) Inventor: Boffito, Claudio, Rho (Milano) (IT); Corazza, Alessio, Como (IT); Tominetti, Stefano, Milano (IT)
(74) Representative: Adorno, Silvano

(56) References cited:
- GB-A- 2 077 487
- US-A- 4 668 424
- US-A- 5 294 422
- US-A- 5 543 687

## Description

The present invention relates to non-evaporable getter alloys.

In particular, the invention relates to non-evaporable getter alloys being of general use and not involving environmental or safety risks.

Non-evaporable getter alloys, also known as NEG alloys, are capable of reversibly sorbing hydrogen and irreversibly gases such as oxygen, water vapor, carbon oxides and some alloys even nitrogen. Accordingly these alloys are used for keeping the vacuum for thermal insulation, e.g. inside the evacuated cavities of the thermal bottles (thermos) or of the Dewar bottles or of the pipes for transporting petroleum in the arctic regions. Otherwise they may be used to remove the aforementioned gases from gaseous atmospheres, generally formed of noble gases. An example thereof is the use in the lamps, particularly fluorescent lamps, wherein the NEG alloy acts such as to keep the atmosphere suitable for the lamp working. Further, NEG alloys are used for purifying inert gases, from which they remove the aforementioned gases; in this case, the purification may be carried out before or upstream with respect to the use of the purified gas, or inside the same chamber wherein the purified gas has to be used, e.g. in the production of semiconductors as disclosed in patent application WO 96/13620 in the name of the company SAES Pure Gas of San Luis Obispo, USA. Generally these alloys have zirconium and/or titanium as their main components and comprise one or more other elements selected among the transition metals or aluminium.

NEG alloys are the subject matter of several patents. Patent US 3,203,901 discloses Zr-Al alloys, and in particular the alloy having weight composition Zr 84% - Al 16%, manufactured and sold by the applicant under the tradename St 101® ; patent US 4,071,335 discloses Zr-Ni alloys, and in particular the alloy having weight composition Zr 75.7% - Ni 24.3%, manufactured and sold by the applicant under the tradename St 199™ ; patent US 4,306,887 discloses Zr-Fe alloys, and in particular the alloy having weight composition Zr 76.6% - Fe 23,4%, manufactured and sold by the applicant under the tradename St 198™ . The use of these materials is generally limited to some specific applications, owing to some of their specific characteristics: e.g., the aforementioned St 101® alloy has an activation temperature of about 900 °C, wherefore it is used when the devices intended to contain the same can withstand high temperatures, whereas the aforementioned St 198™ alloy shows only a limited nitrogen sorption.

Materials similar to those disclosed in the aforementioned patents have even more specific applications. For example, patent CA 1,320,336 discloses the use of the intermetallic compound ZrCo as a means for reversibly storing hydrogen, in that it has a high equilibrium pressure with respect to this gas and its isotopes. Patent US 4,668,424 discloses zirconium-nickel-mischmetal alloys, possibly including also one or more metals such as cobalt. The use of these materials is however limited to the reversible sorption of hydrogen and its isotopes.

Owing to the above described reasons, the aforementioned alloys may be defined as alloys of specific use, and are often described and referred to in patents and technical or commercial bulletins with reference to the use in specific applications.

On the other hand, there are alloys having relatively low activation temperatures and good sorption properties for a wide variety of different gases; alloys showing these functional characteristics are especially useful because they may be used in a wide range of conditions and thus in several different applications. These alloys may be defined as alloys of general use, and as such they will be hereinafter referred to. Among the alloys of general use, the most widely used is the alloy having weight composition Zr 70% - V 24.6% - Fe 5.4%, having an activation temperature ranging from 350 to 500 °C, which is relatively low with respect to the normal values for getter materials; this alloy is disclosed in patent US 4,312,669 and is manufactured and sold by the applicant under the tradename St 707™. However, the St 707™ alloy has the drawback of containing vanadium, the compounds of which, in particular its oxides, are toxic. Vanadium is contained in many alloys used for purifying inert gases, disclosed in several laid-open patent applications in the name of the company Japan Pionics, among which e.g. applications Kokai 5-4809, 6-135707 and 7-242401.

Another problem occurring when using some NEG alloys of the prior art is the fact that, when suddenly contacting great amounts of reactive gases, e.g. being exposed to air, and mainly when the alloy at the start has a temperature above 200-250 °C, they may give rise to strongly exothermic reactions resulting in a rise of temperature above 1000 °C, thereby endangering the safety of workers and machinery. In fact, these alloys are generally contained inside devices or equipments made of metal, often steel, having walls which may melt at temperatures above 1000 °C, possibly resulting in the leakage of materials at high temperature and in damages to the surrounding environment. These events may occur e.g. resulting from accidental breakings of the device containing the alloy or from mistakes of the operators in charge of the assembling or the working of the same devices. These problems mainly occur when purifying inert gases; inside the purifier, having walls generally made of steel, there are great amounts of getter alloys kept at working temperatures of about 400 °C; should air or other reactive gases accidentally enter, these conditions promote violent reactions possibly resulting in the melting of all the mass of getter material and of the purifier walls. Similar events have already occurred in the past in semiconductor production plants wherein medium- and large-sized gas purifiers are used based on the use of getter alloys. Furthermore, in similar cases the danger increases of the NEG materials forming and spreading in the environment toxic or harmful species, such as e.g. vanadium oxides when the getter material is the St 707 alloy or any alloy disclosed in the aforementioned patent applications in the name of Japan Pionics.

It is an object of the present invention to provide non-evaporable getter alloys being of general use and not involving the aforementioned environmental or safety risks.

In particular, it is an object of the present invention to provide getter alloys capable of sorbing a wide variety of gases which have a relatively low activation temperature, not containing vanadium or other materials being toxic or capable of forming toxic compounds, and reaching temperatures lower than other known NEG alloys in case of violent reaction with reactive gases.

According to the present invention, this object is achieved by using non-evaporable getter alloys comprising zirconium, cobalt and one or more components selected among yttrium, lanthanum or rare earths as claimed in claim 1.

The invention will be hereinafter described with reference to the drawings wherein:
- Fig. 1 shows a ternary diagram having thereon the possible compositions of NEG alloys according to the invention;
- Figs. 2a-2d show some possible embodiments of non-evaporable getter devices produced by using the alloys of the invention;
- Figs. 3 to 7 show graphs representing the gas sorption properties of the alloys of the invention and of some reference alloys.

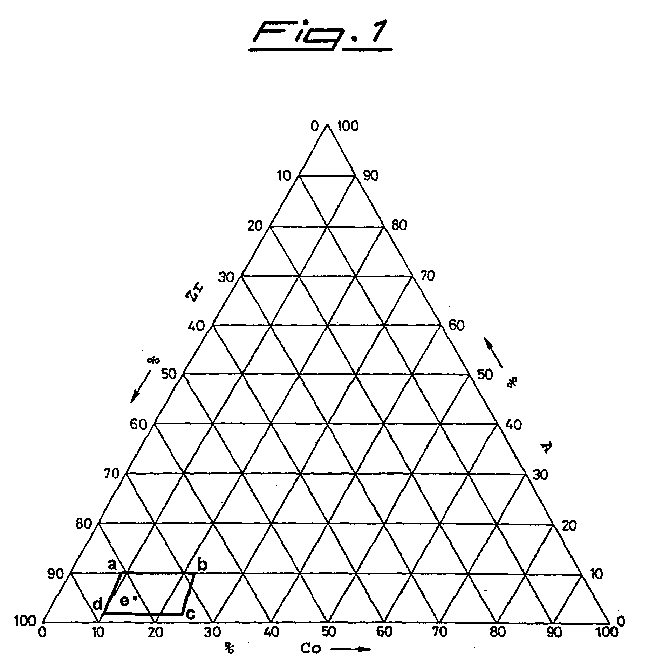

The alloys useful for putting the invention into practice are those which, in the ternary diagram of weight compositions of Figure 1, are enclosed in the polygon defined by the points:
a) Zr 81% - Co 9% - A 10%;
b) Zr 68% - Co 22% - A 10%;
c) Zr 74% - Co 24% - A 2%;
d) Zr 88% - Co 10% - A 2%.
wherein A is any element selected among yttrium, lanthanum, rare earths or mixtures thereof.

In particular, the alloys are preferred which contain the element or the mixture of elements A in a percentage of about 5% by weight; the alloy is even more preferred having weight composition Zr 80.8% - Co 14.2 % - A 5%, indicated by point e in the diagram of Figure 1.

The use of mischmetal as the third component besides zirconium and cobalt is especially useful for the invention. Mischmetal, hereinafter also indicated simply as MM, is a mixture of elements comprising above all cerium, lanthanum and neodymium, and smaller amounts of other rare earths. Anyhow, the exact composition of mischmetal is not critical, since the aforementioned elements have similar reactivities, whereby the chemical properties of the different types of mischmetal remain essentially the same upon varying the content of the single elements; accordingly, the working characteristics of the alloys of the invention do not depend upon the specific composition of the used type of mischmetal.

The alloys of the invention may be prepared by melting in a furnace pieces or powders of the component metals, taken in the ratios corresponding to the desired resulting composition. The techniques of arc-furnace melting in inert gas atmosphere, e.g. under a pressure of 300 mbar of argon; or induction-furnace melting , in vacuum or in inert gas, are preferred. It is anyhow possible to use other current techniques in the metallurgical field for preparing alloys. Melting requires temperatures above about 1000 °C.

In order to produce getter devices using the alloys of the invention, whether they are formed of pellets of the sole getter material or of the assembly of this latter on a support or in a container, alloys are preferably used in form of powders, having particle size generally smaller than 250 µm and preferably ranging from 40 to 125 µm. Larger particle sizes involve an exceeding reduction of the specific surface (surface area per weight unit) of the material, resulting in an impairing of the gas sorption properties, mainly at temperatures lower than about 200 °C; particle sizes smaller than 40 µm, even though they may be used and are required in some applications, cause some problems in the manufacturing steps of getter devices.

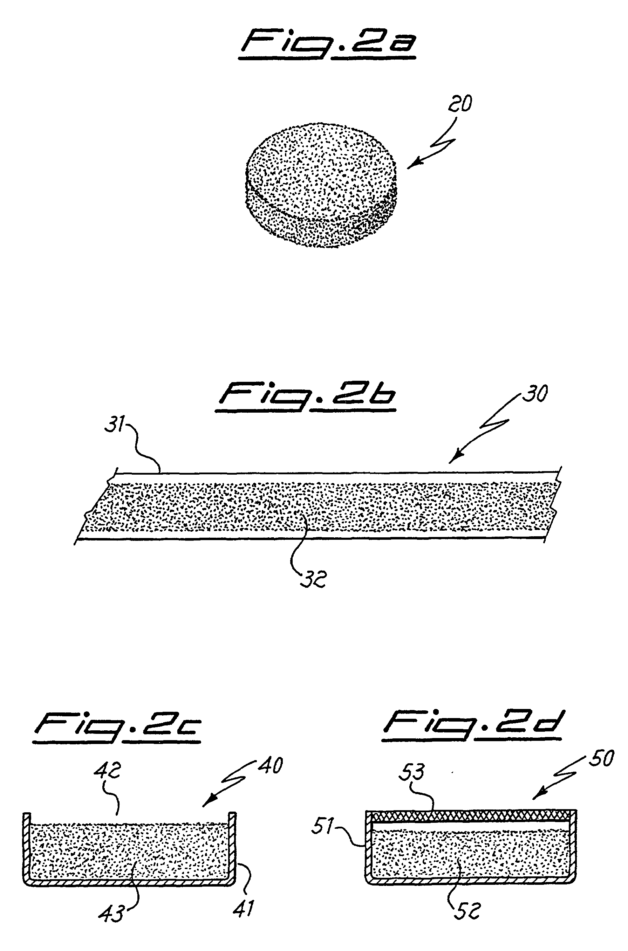

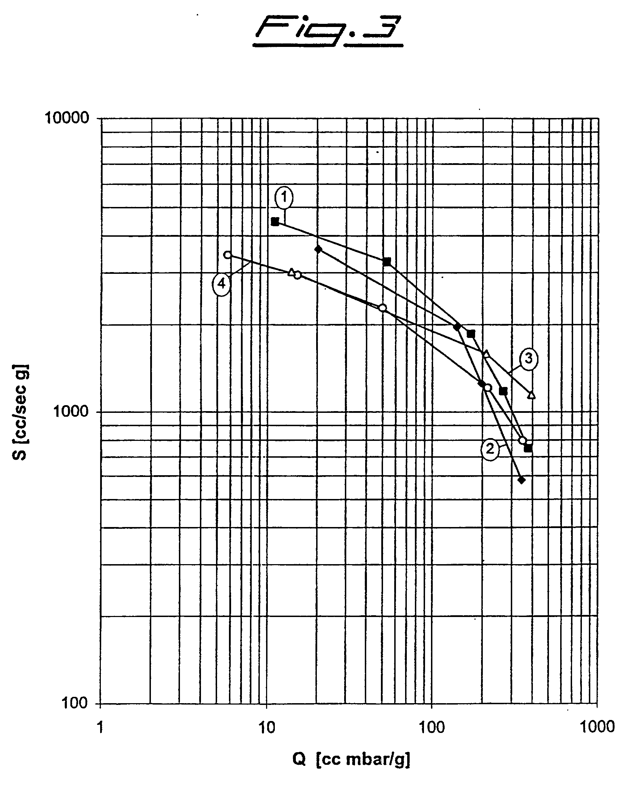

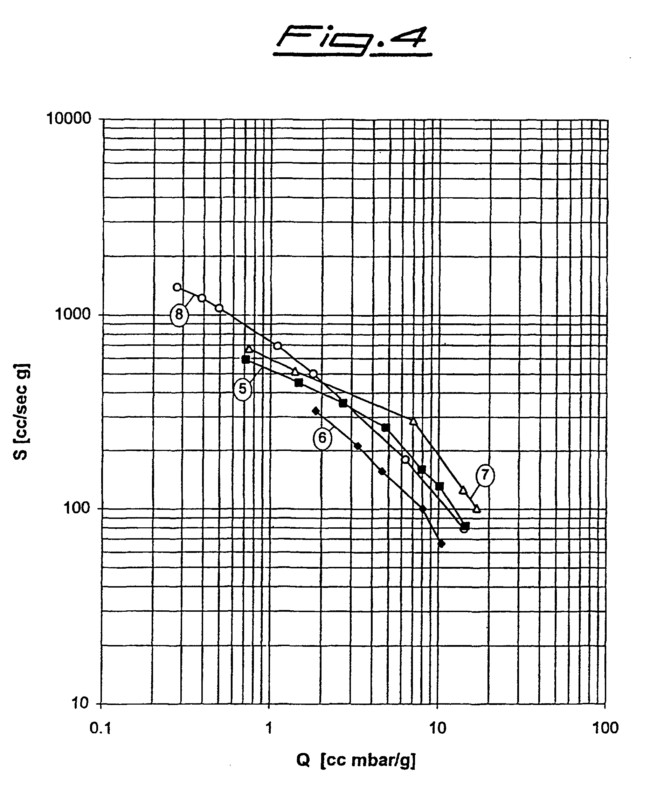

As already mentioned, the getter devices which can be prepared by using the alloys of the invention may have a wide variety of shapes, including pellets formed of the sole powders of the getter alloy, or of these on a metal support. In both cases the clotting of powders may be carried out by compression or by sintering. The pellets of sole compressed powders are used e.g. in the thermal insulation of thermos. When the powders are supported, steel, nickel or nickel alloys are generally used as supporting material. The support may be simply in form of a tape the surface of which has the alloy powders adhered thereon by cold rolling or by sintering after deposition carried out with various techniques; getter devices obtained from such tapes are used in the lamps. The support may also be formed of a real container, which may have any shape and has the powders inserted therein generally by compression, or even without compression in devices wherein the container is provided with a porous septum, permeable to the gas but capable to retain the powders. Some of these embodiments are represented in Figures 2a to 2d: Figure 2a shows a pellet 20 formed only of compressed NEG alloy powders; Figure 2b shows a NEG device 30 formed of a metal tape 31 having thereon NEG alloy powders 32; Figure 2c is a sectional view of a NEG device 40 formed of a metal container 41 with an upper opening 42, having therein NEG alloy powders 43; and Figure 2d is a sectional view of a NEG device 50 formed of a metal container 51 having therein NEG alloy powders 52, with an upper opening closed by a porous septum 53.

The NEG alloys of the invention are alloys of general use, and thus have relatively low activation temperature and are capable of sorbing several gases.

An activation sufficient to make the alloys of the invention functional may be obtained by heating them at 200 °C for 1-2 hours. A complete activation, ensuring higher rates and higher sorption capacities, is obtained by heat treatment at 350 °C for one hour.

Once these alloys are activated, they can act so as to sorb gas other than hydrogen from room temperature to the theoretic limit of the melting point. Generally the maximum working temperature is about 500 °C, so as not to impair the stability and the functionality of the device having them therein. At room temperature the sorption is limited to the grain surface and the sorption capacity is therefore limited, whereas at temperatures higher than about 300 °C the rate of the diffusion of the sorbed gas molecules from the surface to the grain core is sufficient to continuously "clean" the surface, thereby improving sorption capacity and sorption rate. The optimal working temperature of these alloys depends upon the specific application: e.g., for purifying gases the optimal temperature ranges from about 300 to about 400 °C.

As for all the NEG materials, the hydrogen sorption is reversible, wherefore the sorption properties are estimated as hydrogen equilibrium pressure on the alloy as a function of the temperature and of the sorbed hydrogen amount. In this respect, the hydrogen sorption of the alloys of the invention is very good: the equilibrium pressure is lower than nearly all the alloys mentioned in the introduction, except for the St 101® alloy, which however requires activation temperatures of 800-900 °C.

Finally, the temperatures reached during violent reactions of the alloys of the invention, e.g. with atmospheric gases, range from about 550 to 740 °C, depending upon the composition, unlike the temperatures of about 1200 °C reached during the combustion of the St 707 alloy. Thus, even in case of accidents resulting from atmospheric gases entering the chamber having the alloy therein, the alloys of the invention do not reach their melting point or the melting point of most materials (metals and alloys such as steels) the walls of said chambers are generally made of. Even in case of accidents the alloy is thus better confined, thereby reducing the dangers for workers and machinery.

The invention will be further illustrated by the following examples. These non-limiting examples illustrate some embodiments intended to teach those skilled in the art how to work the invention and to represent the best considered way to put the invention into practice.

### EXAMPLE 1

This example describes the preparation of an alloy of the invention.

80.8 g of zirconium are weighed, as well as 14.2 g of cobalt and 5.0 g of mischmetal having weight composition about 50% of cerium, 30% of lanthanum, 15% of neodymium and the residual 5% of other rare earths. The powders are mixed and put into a water-cooled copper crucible of an arc-furnace, under an atmosphere of 300 mbar of argon. The mixture during the melting reaches a temperature of about 2000 °C, which is kept for about 5 minutes. Since the preparation is carried out in an arc-furnace by putting the starting materials in a water-cooled copper crucible, i.e. with a high thermal gradient (so-called "cold earth" technique), the ingot melting is repeated four times in order to enhance the alloy homogeneity. The ingot obtained by cooling the molten mass is then ground, and the resulting powder is finally sieved, while collecting the fraction having particle size ranging from 40 to 105 µm. This powder is used for preparing the different samples used in the following tests: each sample is obtained by compressing 150 mg of powder inside a ring-shaped container under a pressure of 2000 kg/cm². A thermocouple is then welded to each container in order to measure the activation temperatures and the test temperatures of the alloys.

### EXAMPLE 2

This example describes the preparation of another alloy of the invention.

83.0 g of zirconium are weighed, as well as 14.7 g of cobalt and 2.3 g of mischmetal, then the procedure of Example 1 is repeated and a series of identical samples is likewise prepared.

### EXAMPLE 3

This example describes the preparation of a third alloy of the invention.

76.7 g of zirconium are weighed, as well as 13.5 g of cobalt and 9.8 g of mischmetal, then the procedure of Example 1 is repeated and a series of identical samples is likewise prepared.

### EXAMPLE 4 (COMPARATIVE)

This example relates to the preparation of a sample of St 707 alloy.

70.0 g of zirconium are weighed, as well as 24.6 g of vanadium and 5.4 g of iron, then the procedure of Example 1 is repeated and a series of identical samples is likewise prepared.

### EXAMPLE 5

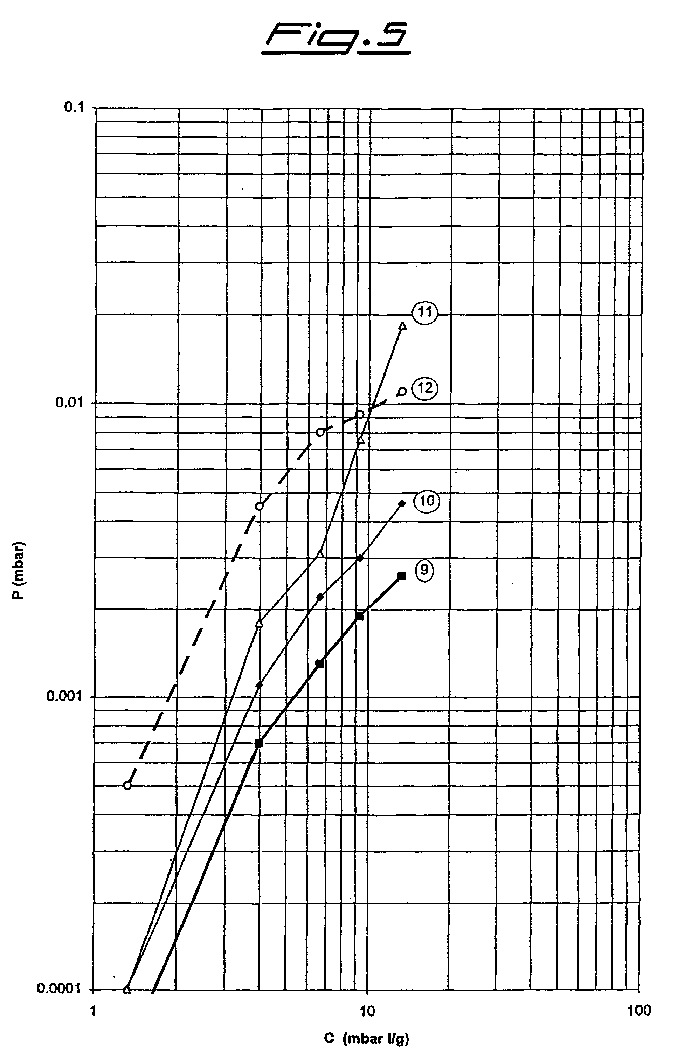

A hydrogen sorption test is carried out on a sample of each alloy prepared in Examples 1 to 4. All the samples are activated at 500 °C for 10 minutes. The sorption tests are carried out according to the procedure described in the standard ASTM F 798-82, by operating at room temperature and under a hydrogen pressure of 4 x 10⁻⁵ mbar. The results of these tests are shown in Figure 3 as sorption rate (S) as a function of sorbed gas amount (Q); curves are indicated with numerals 1 to 4 for samples 1 to 4, respectively.

### EXAMPLE 6

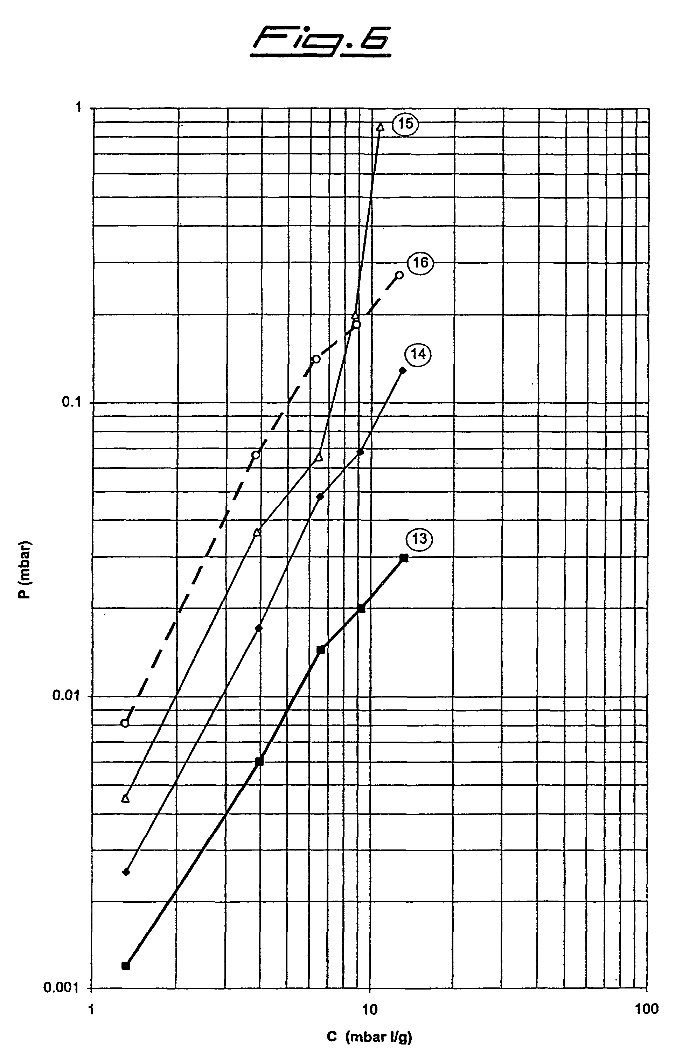

The test of Example 5 is repeated, by using other four samples prepared in Examples 1 to 4, but using in this case CO as test gas. The results of these tests are shown in Figure 4, as curves indicated by numerals 5 to 8 for samples 1 to 4, respectively.

### EXAMPLE 7

The hydrogen equilibrium pressures are measured for the three alloys of the invention of Examples 1-3 and the St 707 alloy of Example 4. The measuring method is similar to the one used in Example 7, but in this case the bulb is not put into a furnace, and the sample is heated from the outside by means of radio-frequencies; furthermore, in this case a liquid nitrogen trap is connected to the bulb, contributing to keep a low background pressure during the test. The system is evacuated up to a residual pressure of 10⁻⁶ mbar. Under pumping, the sample is activated by heating with radio-frequencies at 720 °C for one hour. Once the activation process is ended, the sample temperature is brought to 700 °C and the bulb is isolated from the pumping system. An exact amount of hydrogen is put into the bulb and the equilibrium pressure reached by the system after 10 minutes is then measured. The sample temperature is subsequently brought to 600 °C and 500 °C, and the equilibrium pressure inside the bulb is measured under the new conditions. The equilibrium pressure measures are then repeated at the same temperatures, but in this case the test temperatures are reached starting from the lower one. This procedure is repeated for each sample introducing different amounts of hydrogen. The concentration of hydrogen sorbed by the alloys under the different measuring conditions is drawn from the measure of the equilibrium pressures, the system volume and the alloy weight being known.

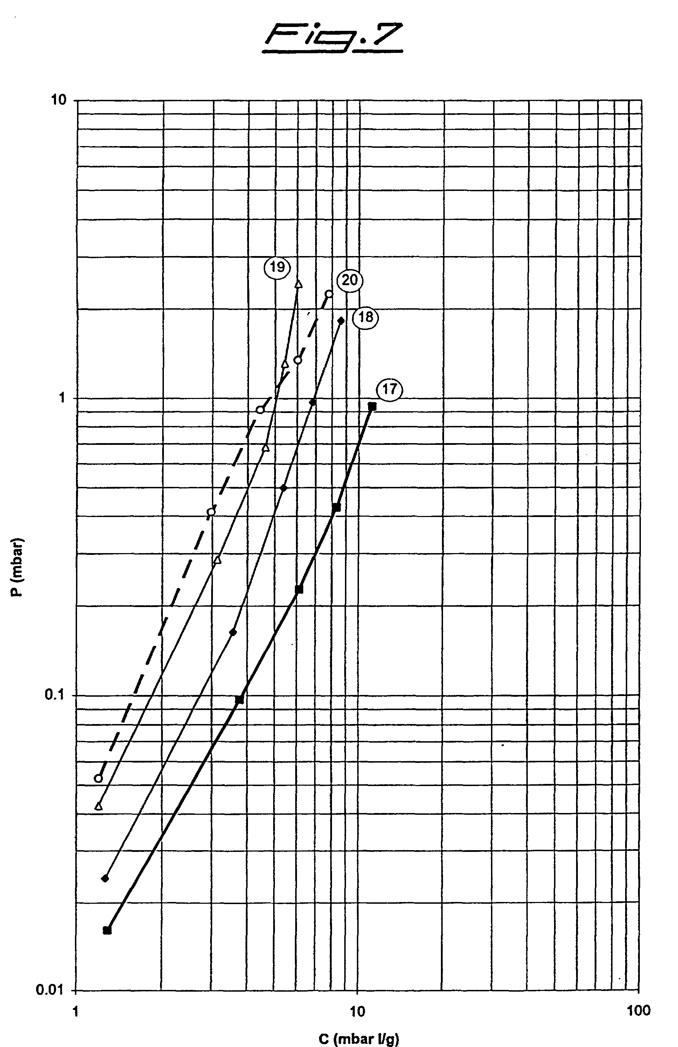

The equilibrium pressure (P) as a function of the concentration (C) of sorbed hydrogen at the different temperatures is shown in Figures 5, 6, 7, respectively related to the equilibrium pressures of the samples at 500, 600, 700 °C. The curves are indicated in Figure 5 by numerals 9 to 12 for samples 1 to 4, respectively; in Figure 6 by numerals 13 to 16 for samples 1 to 4, respectively; in Figure 7 by numerals 17 to 20 for samples 1 to 4, respectively.

### EXAMPLE 8

In this example the temperature is measured which the alloys of the invention and some reference alloys reach during the combustion in air.

A sample is tested for each alloy of Examples 1-4, as well as a sample, prepared according to Example 1, for each alloy St 198, St 199 and St 101 mentioned in the text. Each sample is put into a glass bulb contacting the atmosphere. The samples are heated with radio-frequencies generated by a coil located outside the bulb, having its power emission controlled by a computer which at the same time records the sample temperature. The starting temperature of combustion in air is previously measured for each alloy. This preliminary test is carried out by supplying the sample with a linearly increasing power through radio-frequency and by monitoring the temperature trend; first all the samples show a temperature linear increase and then an upward deviation from linearity; the temperature corresponding to the deviation is considered as the combustion starting temperature.

The maximum temperature test is carried out by heating each sample through radio-frequencies up to the previously measured starting temperature, by stopping the external heating once this temperature is reached and by measuring the maximum temperature reached by the sample during the combustion. The accuracy of these measures is ± 5 °C.

The test results are reported in the following Table, wherein each sample is indicated by the number of the Example showing its preparation or by its tradename.

**TABLE**

| **SAMPLE** | **MAXIMUM TEMPERATURE (°C)** |
|---|---|
| EXAMPLE 1 | 720 |
| EXAMPLE 2 | 550 |
| EXAMPLE 3 | 740 |
| EXAMPLE 4 | 1200 |
| St 198 | 750 |
| St 199 | 920 |
| St 101 | >1300 |

In Figures 3 to 7 the sorption properties of the alloys of the invention and of the St 707 alloy, being the best alloy of general use among the known ones, are compared with respect to several gases. The tests have been carried out on hydrogen and carbon monoxide, because these gases mainly contribute to the residual pressure in the evacuated chambers. As the graphs examination shows, the alloys of the invention have properties similar to St 707 alloy with respect to CO and better properties with respect to hydrogen, except for the alloy having the maximum mischmetal content (sample 3), which shows an equilibrium pressure increase at high values of sorbed hydrogen. The maximum temperature reached by these alloys during combustion does not exceed about 740 °C, being a temperature that metal walls can withstand, thereby allowing the alloy to be confined in case of accidents. As a reference, in the test also the maximum temperatures have been measured reached during the combustion by some alloys of specific use, having however more limited applications with respect to the alloys of the invention; as the results in the Table show, also these alloys, except for the St 198 alloy, reach higher temperatures and thus involve greater safety problems with respect to the alloys of the invention. In conclusion, the alloys of the invention, by virtue of their relatively low activation temperature and of the great number of sorbed gases, may be used in a variety of applications, such as e.g. in evacuated cavities of thermos or Dewar bottles or for purifying gases; furthermore, since these alloys do not contain toxic metals and reach, in case of combustion, relatively low temperatures, they involve in case of accidents smaller environmental and safety problems with respect to the St 707 alloy, which has similar activation and gas sorption properties, and also with respect to most of the other known getter alloys, which have a less wide application range.

## Claims

1. Non-evaporable getter (NEG) alloys comprising zirconium, cobalt and one or more components selected among yttrium, lanthanum or rare earths such that, in the ternary diagram of weight % compositions, they are enclosed in the polygon defined by the points:
a) Zr 81% - Co 9%-A 10%;
b) Zr 68% - Co 22% - A 10%;
c) Zr 74% - Co 24% - A 2%;
d) Zr 88% - Co 10% - A 2%.
wherein A is any element selected among yttrium, lanthanum, rare earths or mixtures thereof.

2. Alloys according to claim 1, wherein the element or the mixture of elements A is in a percentage of about 5% by weight.

3. Alloys according to claim 2, having a weight composition Zr 80.8% - Co 14.2% - A 5%.

4. Alloys according to claim 1, wherein the component A is formed of a mixture of lanthanum and rare earths known as mischmetal.

5. A non-evaporable getter device containing an alloy of claim 1, wherein the alloy is in form of powders having particle size smaller than 250 µm.

6. A device according to claim 5, wherein the alloy is in form of powders having particle size ranging from 40 to 125 µm.

7. A non-evaporable getter device (20), formed only of powders of an alloy of claim 1.

8. A device according to claim 7, wherein said powders are compressed or sintered.

9. A non-evaporable getter device, formed of powders of an alloy of claim 1 on a metal support.

10. A device (30) according to claim 9, wherein the support is in form of a tape (31).

11. A device (40) according to claim 9, wherein the support is an open container (41).

12. A device (50) according to claim 9, wherein the support is a container (51) having an opening closed by a porous metal septum (53).

13. The use of an alloy of claim 1 for sorbing reactive gases in vacuum or in an inert gas atmosphere.

14. The use according to claim 13, wherein the reactive gases are hydrogen, nitrogen, oxygen, water vapor, carbon monoxide and dioxide.

15. The use according to claim 13, for keeping the vacuum in a thermally insulating evacuated cavity having metal or glass walls.

16. The use according to claim 15, wherein said cavity is the cavity of a thermos, of a Dewar bottle or of a pipe for transporting petroleum.

17. The use according to claim 13, for purifying noble gases.

18. The use according to claim 17, wherein the noble gases are purified inside a process chamber for manufacturing semiconductors.

19. The use according to claim 13, for keeping a controlled atmosphere inside lamps.

## Patentansprüche

1. Nicht verdampfbare Getter-(NEG-)Legierungen, welche Zirconium, Cobalt und eine oder mehrere Komponenten umfassen, die aus Yttrium, Lanthan oder Seltenerdmetallen derart ausgewählt sind, dass sie im ternären Diagramm der prozentualen Gewichtszusammensetzungen von dem Polygon umschlossen werden, das durch die Punkte
a) Zr 81 % - Co 9 % - A 10 %,
b) Zr 68 % - Co 22 % - A 10 %,
c) Zr 74 % - Co 24 % - A 2 %,
d) Zr 88 % - Co 10 % - A 2 %,
definiert ist, wobei A ein Element bedeutet, das aus Yttrium, Lanthan, Seltenerdmetallen oder Gemischen davon ausgewählt ist.

2. Legierungen nach Anspruch 1, worin das Element oder das Gemisch aus Elementen A mit einem Anteil von etwa 5 Gew.% vorliegt.

3. Legierungen nach Anspruch 2 mit einer Gewichtszusammensetzung von Zr 80,8 % - Co 14,2 %-A 5 %.

4. Legierungen nach Anspruch 1, worin die Komponente A von einem als Mischmetall bekannten Gemisch aus Lanthan und Seltenerdmetallen gebildet ist.

5. Nicht verdampfbare Gettervorrichtung, die eine Legierung nach Anspruch 1 enthält, wobei die Legierung in Form eines Pulvers mit einer Teilchengröße von unter 250 µm vorliegt.

6. Vorrichtung nach Anspruch 5, wobei die Legierung in Form eines Pulvers mit einer Teilchengröße von 40 bis 125 µm vorliegt.

7. Nicht verdampfbare Gettervorrichtung (20), die ausschließlich von einem Pulver aus einer Legierung nach Anspruch 1 gebildet ist.

8. Vorrichtung nach Anspruch 7, worin das Pulver verdichtet oder gesintert ist.

9. Nicht verdampfbare Gettervorrichtung, die von einem Pulver aus einer Legierung nach Anspruch 1 auf einem metallischen Träger gebildet ist.

10. Vorrichtung (30) nach Anspruch 9, worin der Träger die Form eines Bandes (31) besitzt.

11. Vorrichtung (40) nach Anspruch 9, worin der Träger ein offener Behälter (41) ist.

12. Vorrichtung (50) nach Anspruch 9, worin der Träger ein Behälter (51) mit einer Öffnung ist, die von einer porösen Metallmembran (53) verschlossen wird.

13. Verwendung einer Legierung nach Anspruch 1 für die Sorption reaktiver Gase in einem Vakuum oder in einer Inertgasatmosphäre.

14. Verwendung nach Anspruch 13, wobei die reaktiven Gase Wasserstoff, Stickstoff, Sauerstoff, Wasserdampf, Kohlenmonoxid und Kohlendioxid sind.

15. Verwendung nach Anspruch 13, um in einem wärmeisolierten evakuierten Hohlraum mit Metall- oder Glaswänden ein Vakuum aufrechtzuerhalten.

16. Verwendung nach Anspruch 15, wobei der Hohlraum der einer Thermosflasche, eines Dewar-Gefäßes oder eines Rohrs für den Transport von Erdöl ist.

17. Verwendung nach Anspruch 13 für die Reinigung von Edelgasen.

18. Verwendung nach Anspruch 17, wobei die Edelgase in einer Kammer für die Herstellung von Halbleitern gereinigt werden.

19. Verwendung nach Anspruch 13, um in Lampen eine kontrollierte Atmosphäre aufrechtzuerhalten.

## Revendications

1. Alliages non vaporisables absorbeurs de gaz (NEG) comprenant du zyrconium, du cobalt et un ou plusieurs éléments choisis parmi l'yttrium, le lanthane ou les terres rares tels que, dans le diagramme ternaire des compositions en % en poids, ils soient. inclus dans le polygone définis par les points :
a) Zr 81% - Co 9% - A 10% ;
b) Zr 68% - Co 22% - A 10% ;
c) Zr 74% - Co 24% - A 2% ;
d) Zr 88% - Co 10% - A 2%.
où A est un élément quelconque choisi parmi l'yttrium, le lanthame, les terres rares ou leurs mélanges.

2. Alliages selon la revendication 1, dans lequel l'élément ou le mélange d'éléments A est dans un pourcentage d'environ 5% en poids.

3. Alliages selon la revendication 2, présentant une composition pondérale Zr 80,8% - Co 14,2% - A 5%.

4. Alliages selon la revendication 1, dans lequel le composant A est formé d'un mélange de lanthane et de terre rares connu en tant que mischmetal.

5. Un dispositif non vaporisable absorbeur de gaz contenant un alliage de la revendication 1, dans lequel l'alliage est sous la forme de poudres présentant une granulométrie inférieure à 250 µm.

6. Un dispositif selon la revendication 5, dans loquel l'alliage est sous la forme de poudres présentant une granulométrie dans la gamme de 40 à 120 µm.

7. Un dispositif non vaporisable absorbeur de gaz (20), formé uniquement de poudres d'un alliage de la revendication 1.

8. Un dispositif selon la revendication 7, dans lequel lesdites poudres sont comprimées ou frittées.

9. Un dispositif non vaporisable absorbeur de gaz, formé de poudres d'un alliage de la revendication 1 sur un support métallique.

10. Un dispositif (30) selon la revendication 9, dans lequel le support est sous la forme d'un ruban (31).

11. Un dispositif (40) selon la revendication 9, dans lequel le support est un récipient ouvert (41).

12. Un dispositif (50) selon la revendication 9, dans lequel le support est un récipient (51) présentant une ouverture fermée par une cloison métallique poreuse (53).

13. L'utilisation d'un alliage selon la revendication 1 pour sorber des gaz réactifs dans le vide ou dans une atmosphère de gaz inerte.

14. L'utilisation selon la revendication 13, dans laquelle, les gaz réactifs sont l'hydrogène, l'azote, l'oxygène, la vapeur d'eau, le monoxyde et le dioxyde de carbone.

15. L'utilisation selon la revendication 13, pour maintenir le vide dans une cavité thermiquement isolante, où un vide a été effectué, présentant des parois en métal ou en verre.

16. L'utilisation selon la revendication 15, dans laquelle ladite cavité est la cavité d'un thermos, une bouteille Deware ou d'une conduite pour le transport de pétrole.

17. L'utilisation selon la revendication 13, pour purifier des gaz nobles.

18. L'utilisation selon la revendication 17, dans laquelle les gaz nobles sont purifiés à l'intérieur d'une chambre de traitement pour la fabrication de semiconducteur.

19. L'utilisation selon la revendication 13, pour maintenir une atmosphère contrôlée à l'intérieur de lampes.
